# EUROPEAN PATENT APPLICATION

(11) **EP 1 791 235 A2**
(43) Date of publication of application: **30.05.2007**
(21) Application number: 06380297.9
(22) Date of filing: 16.11.2006
(51) Int. Cl.: H02G 3/06

(54) **Elbow for electric cable raceways**

(30) Priority: 24.11.2005 ES 200502583 U
(71) Applicant: Unex Aparellaje Electrico S.L., 08903 L'Hospitalet de Llobregat (Barcelona) (ES)
(72) Inventor: Salcedo Suñol, Eloi, 08620 Sant Vicenç dels Horts Barcelona (ES)
(74) Representative: Curell Aguilà, Marcelino

(57) **Abstract**

Elbow for electric cable raceways intended to close the empty space formed in the intersection between two electric cable raceways in a dihedral formed by two walls, particularly a dihedral that forms an angle other than a right angle. The elbow comprises a central part (5) suitable for closing said empty space at the front and two end parts (6) suitable for closing said empty space at the top and the bottom. Said central (5) and end (6) parts comprise mutual attachment means (16, 17, 18) and a plurality of cutting indication lines (8) that indicate cuts to be made, in said central (5) and end (6) parts, in order to adjust the size of the elbow to a plurality of electric cable raceway widths and to a plurality of dihedral angles formed by the walls.

## Description

### Field of the invention

The invention relates to an elbow for electric cable raceways, intended to close the empty space formed in the intersection between two electric cable raceways extending along one and the same plane on two surfaces or walls that form a dihedral, which can be concave (for an inwards facing corner) or convex (for an outwards facing corner). The elbow to which the invention relates is especially applicable to dihedrals that do not form a right angle.

### State of the art

Some elbows are known for covering the intersection between two electric cable raceway sections when said intersection is formed in a right angled dihedral, such as for example, those disclosed in Spanish Utility Models number 9800280 and 9800281, as well as those disclosed in Spanish Industrial Designs number 135611 and 147222.

However, the intersections formed in dihedrals other than at 90° are left to the experience of each operator. In order to resolve this situation, the system is applied whereby the ends of the two raceway sections are cut to coincide with the bisecting line of the angle determined by the dihedral in the outward or inward facing corner formed by the surfaces or walls. This process suffers from the drawback that the raceway electrical insulation is not very reliable, causing gaps to appear which allow dust and insects to enter. Moreover, and above all, it is time-consuming work and, generally speaking, results do not have a particularly aesthetic appearance.

### Disclosure of the invention

In order to overcome said drawback and avoid the need to provide as many elbow models as there may be dihedral angles in practice, the solution has been adopted to form an elbow by associating some parts which, together, cover the intersection's empty space, both for outward and inward facing corners, and so that each of these parts can be adjusted easily to the dimensions of said intersection's empty space.

According to this solution, the elbow for electric cable raceways that is the object of the invention has been designed, characterised in that it comprises a central part suitable for closing said empty space at the front and two end parts suitable for closing said empty space at the top and the bottom, said central and end parts comprising mutual attachment means and having a plurality of cutting indication lines indicating cuts to be made, in said central and end parts, in order to adjust the size of the elbow to a plurality of electric cable raceway widths and to a plurality of angles of the dihedral formed by the two walls.

Preferably, the central part is made up of a cylindrical sector and, advantageously, the cutting indication lines arranged on the central part include circumferential arcs that extend over the inner surface of said central part on planes that are parallel to each another and parallel to the bases of the cylindrical sector making up said central part, said circumferential arcs being separated from one another by predetermined distances, so that by cutting at least one longitudinal end of said central part along one of said circumferential arcs, the height of said central part is adapted to the width of the electrical cable raceways.

In a first embodiment of the elbow according to the invention, which is applied in the case of an outward facing corner formed by a convex dihedral, in other words when the dihedral formed by the walls is greater than 180 degrees, the cylindrical sector making up the central part also forms an angle greater than 180 degrees.

Preferably, the cutting indication lines in said central part include axial lines that extend over the inner surface of said central part in the direction of the generant of the cylindrical sector forming said central part, and which are separated from each other by predetermined distances, so that by cutting at least one lateral end of the central part along one of said axial lines, the angle covered by said central part is adapted to the dihedral angle.

Preferably, said axial lines cover one part of the surface on the inner surface of the central part, and said circumferential arcs are arranged on the other part of said surface.

Preferably, the end parts are made up of a disc sector having an angle greater than 180° and having, as said mutual attachment means, a perimetric skirting that extends around the circular edge of the end part and, located inside and in the centre with respect to said perimetric skirting, a tab that projects with respect to said perimetric skirting and which is separated from said perimetric skirting by a distance that is equivalent to the thickness of said central part, so that the edge of said central part is pinched and retained between said perimetric skirting and said tab.

Preferably, when the end parts are made up of a disc sector having an angle greater than 180°, the cutting indication lines on said end parts include, on the inner surface of said end part, a series of angled lines that are parallel to one another and meet on the bisecting line of said disc sector.

In a second embodiment of the elbow according to the invention, which is applied in the case of an outward facing corner formed by a concave dihedral angle, in other words when the dihedral angle formed by the walls is less than 180 degrees, the cylindrical sector making up the central part forms an angle less than 90 °.

Preferably, the end parts are made up of a disc sector and have, as said mutual attachment means, a perimetric skirting that extends along a central section of the circular edge of the end part and, located inside and in the centre with respect to said perimetric skirting, a tab that projects with respect to said perimetric skirting and that is separated from the latter by a distance that is equivalent to the thickness of the central part, so that the edge of said central part is pinched and retained between said perimetric skirting and said tab.

Preferably, the end parts are made up of a disc sector having an angle less than 90° and having an extension on their circular edge, in the shape of a circular strip that has an angle greater than that of said disc sector.

Preferably, the cutting indication lines arranged on the end parts include, on the inner surface of said end part, a bisecting line, which extends along the bisecting line of said disc sector, and two series of circumferential, concentric arcs, separated from one another by predetermined distances, and which originate on the circular edge of said end part, the two series of circumferential arcs being symmetrical with respect to the bisecting line of said disc sector.

### Brief description of the drawings

To promote understanding of the preceding ideas, a preferred embodiment of the invention is described below, with reference to the accompanying drawings, in which:
Figure 1 represents, diagrammatically, a perspective view showing, in an outward facing, convex and obtuse corner formed by the intersection of two surfaces, the intersection between two electric cable raceway sections (without cables), showing the empty space formed between the coinciding ends of said raceways.
Figure 2 represents, diagrammatically, a plan view of the arrangement in the preceding figure.
Figure 3 represents an exploded, perspective view of the central part and the two end parts constituting a first embodiment of an elbow according to the invention, in the case of an intersection between two raceway sections in a convex dihedral like the one shown in Figures 1, 2 and 9.
Figure 4 represents a plan view of the bottom face, in other words the surface remaining on the inside in the assembled position, of one of the end parts in Figure 3.
Figure 5 represents a perspective view showing the inner surface, in other words, the surface remaining on the inside in the assembled position, of the central part in Figure 3.
Figure 6 represents the central and end parts forming a second embodiment of an elbow according to the invention, in the case of an intersection between two raceway sections in a concave dihedral like the one shown in Figure 10.
Figure 7 represents a plan view of the inner surface, in other words the surface remaining on the inside in the assembled position, of one of the end parts in Figure 6.
Figure 8 represents a perspective view of the central part in Figure 6, showing the inner surface thereof, in other words the surface remaining on the inside in the assembled position.
Figure 9 represents, in perspective, an intersection of two raceway sections in a convex dihedral, where the parts forming the elbow according to the first embodiment shown in Figures 3 through 5, have been applied.
Figure 10 represents, in perspective, an intersection of two raceway sections in a concave dihedral, where the parts forming the elbow according to the second embodiment shown in Figures 6 through 8, have been applied.

### Detailed description of some embodiments of the invention

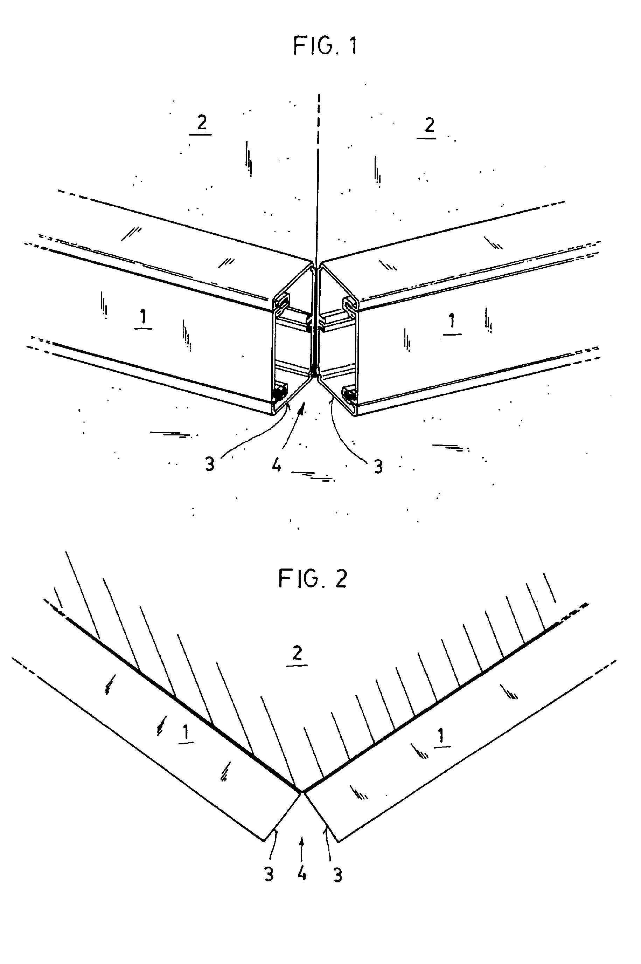

Figures 1 and 2 represent a case wherein the object of the invention is particularly applicable. Two sections 1 of electrical cable raceways are installed on respective surfaces 2 or walls determining an outward facing corner formed by a dihedral having an angle greater than 180° and less than 270°. Raceways 1 are made up of a base section closed, in an openable manner, by a cover section. Between the free ends 3 of the sections of raceway 1 an empty space 4 is formed, which is the one that must be covered by the elbow that is the object of the invention.

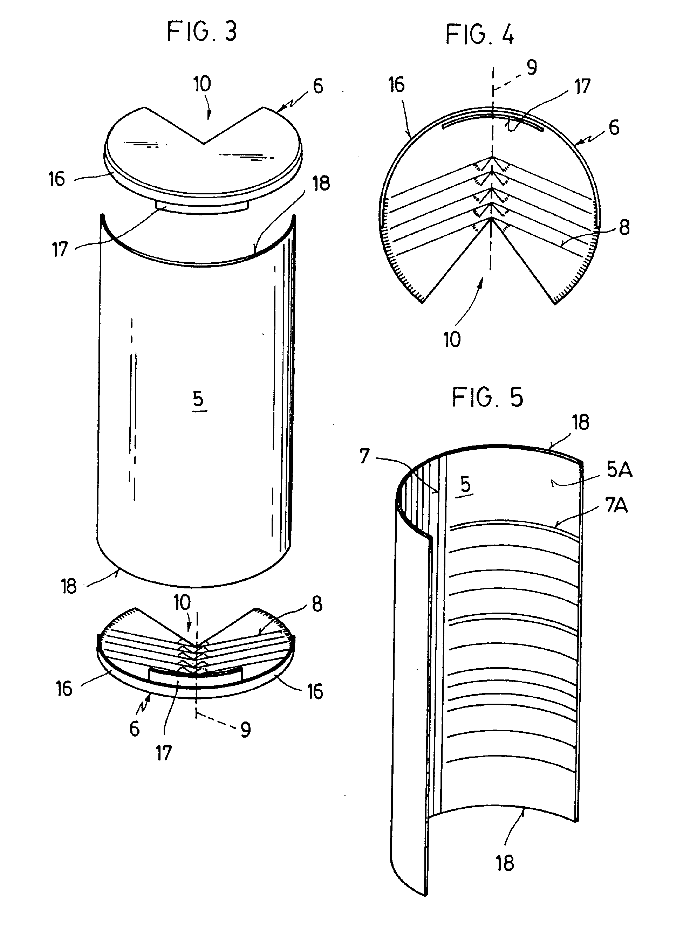

For a corner of this type, a first embodiment of the elbow according to the invention is applied, which is shown in Figures 3, 4, 5 and 9. The elbow is made up of a central part 5, shaped like a cylindrical section and intended to close empty space 4 at the front, and two end parts 6, each shaped like a disc sector having a notch 10 and intended to cover the top and bottom ends of empty space 4.

The assembly formed by central part 5 and the two end parts 6 originally has a perimeter delimiting a possible empty space to be covered, the dimensions of which can be adjusted thanks to the fact that central 5 and end 6 parts have adjustment means consisting of a plurality of cutting lines 7, 7A, 8 that are parallel to one another and conveniently distanced according to the sizes of empty space 4 to be covered, according to the width of raceways 1 and the dihedral angle formed by walls 2.

As it can be seen in Figure 5, central part 5 has on its inner surface 5A, as said adjustment means, a plurality of axial lines 7, extending in the direction of the generant of the cylindrical sector forming central part 5, and a plurality of circumferential lines 7A extending along planes parallel to the bases of said cylindrical sector. Lines 7, 7A can be weakening lines or simple etched or printed lines to guide the cutting, and which are parallel to one another and conveniently separated according to the standardised dimensions of empty space 4 to be covered, which are determined by the various models in the electrical cable raceway range and by the various dihedral angles envisaged. Inner surface 5A of central part 5 has its surface distributed between dedicating one part thereof to containing axial lines 7 and dedicating the remaining part to containing circumferential arcs 7A.

As shown in Figures 3 and 4, the cutting indication lines arranged on the inner surface of end parts 6 are angled lines 8 parallel to one another and aligned so that their apices coincide along bisecting line 9 of the disc sector forming said end parts 6. As in the case of lines 7 and 7A, lines 8 can be weakening lines or cutting guide lines made by simple etched grooves or simple etched or printed marks.

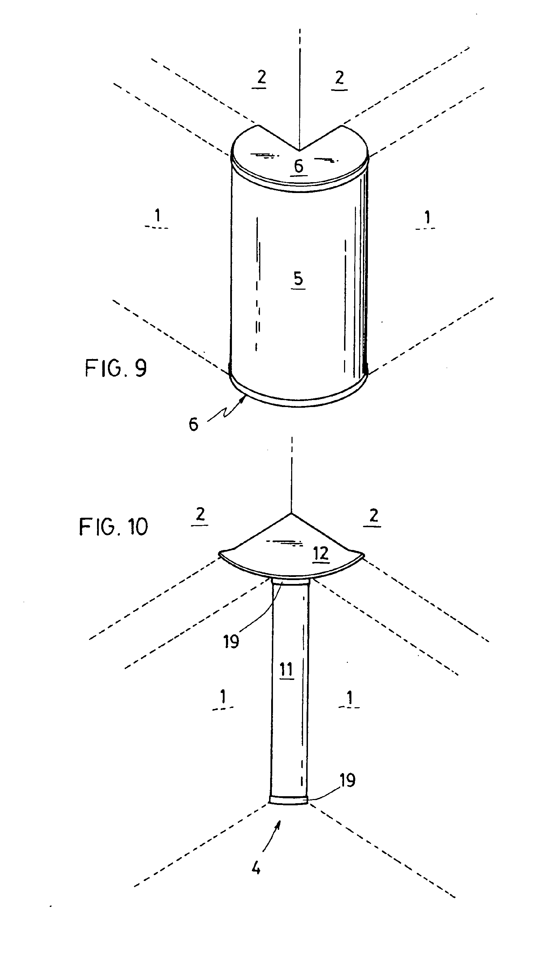

In addition to the adjustment means made up of lines 7, 7A and 8, central 5 and end 6 parts comprise mutual attachment means made up of perimetric skirting 16 that extends along the circular edge of end part 6, and a tab 17 that projects with respect to said perimetric skirting 16 and which is located in the centre and on the inside with respect to said skirting. The distance between tab 17 and skirting 16 is equivalent to the thickness of edge 18 of central part 5. As it can be seen in Figures 3 and 9, central part 5 attaches to end parts 6 thanks to the fact that its edge 18 fits between perimetric skirting 16 and tab 17. Said perimetric skirting 16 attaches on the outside to edge 18.

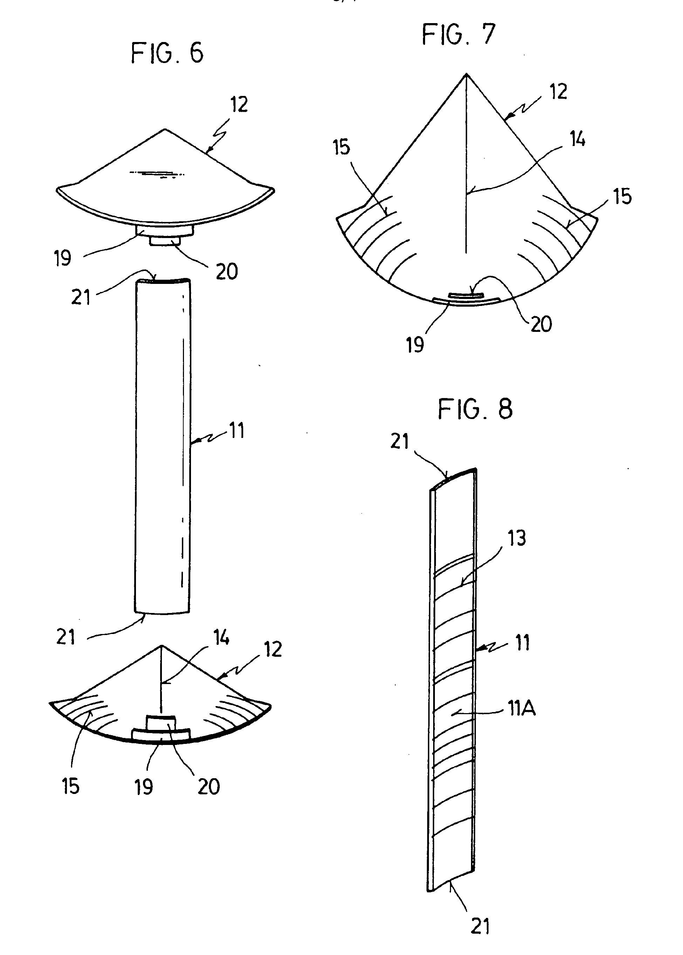

Figures 6, 7, 8 and 10 represent a second embodiment of the elbow according to the invention which is applied in the case where the two raceway sections 1 meet in a concave dihedral, having an angle less than 90°.

In this case, the elbow according to the invention is made up of a central part 11 and two end parts 12. As in the case above, central part 11 closes the front of the empty space 4 which has been formed between raceways 1, while end parts 12 close the ends of said empty space 4. Central part 11 is shaped as a cylindrical sector having an angle less than 90°. End parts 12 are shaped as a disc sector having an angle less than 90° and having on their circular edge an extension in the form of a circular strip, which has an angle greater than that of said disc sector. The elbow includes mutual attachment means between central part 11 and the two end parts 12, made up of a perimetric skirting 19 and a tab 20, similar to the one in the first embodiment, with the exception that in this case perimetric skirting 19 only extends in a central section of the circular edge of end part 12. As in the case above, edge 21 of central part 11 fits between perimetric skirting 19 and tab 20.

As it can be seen in Figure 8, the cutting indication lines arranged as adjustment means on inner surface 11A of central part 11 are made up of a plurality of circumferential lines 13 arranged on planes that are parallel to one another and parallel to the bases of the cylindrical sector forming said central part 11.

Also, as it can be seen in Figure 7, the cutting indication lines arranged as adjustment means on the inner surface of end parts 12 are made up of a straight line 14 that extends along the bisecting line of end part 12 and two series of concentric, circumferential arcs 15 originating from the circular edge of end part 12 and which are separated from each other by predetermined distances. The two series of circumferential arches 15 are symmetrical with respect to said bisecting line. In this case, lines 14 and 15 do not directly indicate the cut to be made, instead they indicate it indirectly. In fact, lines 14 and 15 are marked or printed lines acting as a reference for placing on the inner surface of end parts 12 a bevel protractor (not shown), which has been used previously to measure the angle of the dihedral formed by the two walls 2. The bevel protractor is placed with its apex on bisecting line 14 and its arms tangential to concentric arcs 15. The arms of the bevel protractor placed in this way indicate the cutting lines to be made on said end part 12 in order to adapt said end part to the dihedral angle.

## Claims

1. Elbow for electric cable raceways, suitable for closing the empty space (4) formed in the intersection between two electric cable raceways (1) extending on one and the same plane along two walls (2) that form a dihedral, **characterised in that** it comprises a central part (5; 11) suitable for closing said empty space (4) at the front and two end parts (6; 12) suitable for closing said empty space (4) at the top and the bottom, said central (5; 11) and end (6; 12) parts comprising mutual attachment means (16, 17, 18; 19, 20, 21) and having a plurality of cutting indication lines (7, 7A, 8; 13, 14, 15) that indicate cuts to be made, in said central (5; 11) and end (6; 12) parts, in order to adjust the size of said elbow to a plurality of widths of said electric cable raceway (1) and to a plurality of angles of said dihedral formed by said walls (2).

2. Elbow for electric cable raceways according to claim 1, **characterised in that** said central part (5; 11) is made up of a cylindrical sector.

3. Elbow for electrical cable raceways according to claim 2, **characterised in that** the cutting indication lines arranged on said central part (5; 11) include circumferential arcs (7A; 13) that extend along the inner surface (5A) of said central part (5) on planes that are parallel to one another and parallel to the bases of said cylindrical sector making up central part (5; 11), said circumferential arcs (7A) being separated from each another according to predetermined distances.

4. Elbow for electric cable raceways according to claims 2 or 3, applicable in the case where the angle of said dihedral formed by walls (2) is greater than 180 degrees, **characterised in that** said cylindrical sector making up central part (5) forms an angle greater than 180 degrees.

5. Elbow for electric cable raceways according to claim 4, **characterised in that** said cutting indication lines on said central part (5) include axial lines (7) that extend on inner surface (5A) of said central part (5) along the generant of the cylindrical sector making up said central part (5) and which are separated from each other according to predetermined distances.

6. Elbow for electric cable raceways according to claims 3 and 5, **characterised in that** said axial lines (7) cover one part of the surface of inner surface (5A) on central part (5), said circumferential arcs (7A) being arranged on the other part of said surface.

7. Elbow for electric cable raceways according to any of claims 3 to 6, **characterised in that** said end parts (6) are made up of a disc sector having an angle greater than 180° and having, as said mutual attachment means, a perimetric skirting (16) that extends along the circular edge of said end part (6) and, located inside and in the centre with respect to said perimetric skirting (16), a tab (17) that projects with respect to said perimetric skirting (16) and which is separated from said perimetric skirting (16) by a distance equivalent to the thickness of said central part (5), so that edge (18) of said central part (5) is pinched and retained between said perimetric skirting (16) and said tab (17).

8. Elbow for electric cable raceways according to any of the claims 3 through 7, **characterised in that** said end parts (6) are made up of a disc sector having an angle greater than 180° and said cutting indication lines on said end parts (6) include, on the inner surface of said end part (12), a series of angled lines (8) parallel to one another and which meet on the bisecting line (9) of said disc sector.

9. Elbow for electric cable raceways according to claim 2, applicable in the case where the angle of said dihedral formed by walls (2) is less than 180 degrees, **characterised in that** said cylindrical sector making up central part (11) forms an angle less than 90 °.

10. Elbow for electric cable raceways according to claim 9, **characterised in that** said end parts (12) are made up of a disc sector and have, as said mutual attachment means, a perimetric skirting (19) that extends along a central section of the circular edge of said end part (12) and, located inside and in the centre with respect to said perimetric skirting (19), a tab (20) that projects with respect to said perimetric skirting (19) and which is separated from said perimetric skirting (19) by a distance equivalent to the thickness of said central part (11), so that edge (21) of said central part (11) is pinched and retained between said perimetric skirting (19) and said tab (20).

11. Elbow for electric cable raceways according to claims 9 or 10, **characterised in that** said end parts (12) are made up of a disc sector having an angle less than 90° and having on its circular edge an extension in the form of a circular strip that has an angle greater than that of said disc sector.

12. Elbow for electric cable raceways according to claim 11, **characterised in that** said cutting indication lines arranged on said end parts (12) include, on the inner surface of said end part (12), a bisecting line (14) that extends along the bisecting line of said disc sector and two series of concentric, circumferential arcs (15), separated from each other by predetermined distances, which originate from the circular edge of said end part (12), said two series of circumferential arcs (15) being symmetrical with respect to the bisecting line of said disc sector.
